Europäisches Patentamt
European Patent Office
Office européen des brevets

(19)

(11) Publication number: **0 134 314**
**A1**

(12) # EUROPEAN PATENT APPLICATION

(21) Application number: 83201145.6

(22) Date of filing: 02.08.83

(51) Int. Cl.[4]: **B 01 J 47/00**
B 01 J 41/10, C 01 D 3/14

(43) Date of publication of application:
20.03.85 Bulletin 85/12

(84) Designated Contracting States:
BE DE FR GB IT NL

(71) Applicant: THE DOW CHEMICAL COMPANY
Dow Center 2030 Abbott Road Post Office Box 1967
Midland Michigan 48640(US)

(72) Inventor: Lee, John Malcolm
123 Aster Lane
Lake Jackson Texas 77566(US)

(72) Inventor: Bauman, William Carrel
440 Highway 332 12
Lake Jackson Texas 77566(US)

(74) Representative: Urbanus, Henricus Maria, Ir. et al,
c/o Vereenigde Octrooibureaux Nieuwe Parklaan 107
NL-2587 BP 's-Gravenhage(NL)

(54) **Removal of sulfate ions from brine.**

(57) Macroporous cation exchange resins with sulfonic acid functional groups having polymeric zirconium hydrous oxide contained therein are useful in substantially removing $SO_4^=$ ions from metal salt solutions. Optionally, the resin has sulfonic acid functional groups which have ionically attached thereto, in the resin phase, amorphous polymer hydrous zirconium oxide groups.

EP 0 134 314 A1

# REMOVAL OF SULFATE IONS FROM BRINE

Various alkali metal halide aqueous solutions or alkaline earth metal halide aqueous solutions, e.g., NaCl brine or $MgCl_2$ brine, contain sulfate values or sulfate ions which are considered detrimental if the aqueous solution is intended for use in certain applications, such as in electrolytic processes. There are commercial incentives to substantially remove such sulfate ions.

It is known that hydrous zirconium oxide and other zirconium compounds, such as zirconium phosphates, are useful as inorganic ion exchangers.

According to the invention, an amorphous polymeric hydrous zirconium oxide is formed within the resin beads of a macroporous cation exchange resin of the sulfonic acid type, thereby forming novel ion exchange composite structures which are useful in removing sulfate ions from metal halide brines.

The invention also contemplates within its scope, the formation of the amorphous polymeric hydrous zirconium oxide within the resin beads of the macroporous

cation exchange resin of the sulfonic acid type and acrylic acid polymerized within the bead matrix, thereby forming novel ion exchange composite structures which are useful in removing sulfate as well as borate, bicarbonate, and/or phosphate ions from alkali metal halide brines.

It is known that zirconium hydroxide is prepared by alkali precipitation of an aqueous solution of a zirconyl salt. For the present invention it is preferred that the alkali be ammonia since it is more easily washed out than the alkali metal hydroxides or alkaline earth metal hydroxides. Precipitation at cold (ambient) temperature gives a gelatinous product which is substantially $Zr(OH)_4$ containing about 26.5% water or more. A partially dehydrated zirconyl hydroxide, $ZrO(OH)_2$, results from drying it at elevated temperature (e.g., 100°C), or from hot precipitation (e.g., 85°C) followed by hot drying.

Thus, in the present invention the expression "hydrous zirconium oxide" has within the purview of its meaning any of the various amorphous hydrated forms of zirconium oxide which are substantially or largely insoluble in water.

The macroporous cation exchange resin is one which contains sulfonic acid ($SO_3^-$) functional groups. Such resins are available commercially, such as sulfonated polymers of styrene crosslinked with divinylbenzene. For instance a macroporous cation exchange resin with $SO_3^-Na^+$ or $SO_3^-H^+$ groups affixed to a styrene--divinylbenzene resin structure is sold by The Dow Chemical Company under the tradename DOWEX® MSC-1-$Na^+$

and DOWEX® MSC-1-$H^+$. It is within the purview of the present invention to use any porous resin containing sulfonic acid functional groups, so long as the resin is substantially inert or non-reactive, when used in the present invention, except for the reactivity of the sulfonic acid functionality groups.

In general, the polymeric zirconium hydrous oxide is formed within the resin beads by wetting the resin with an aqueous solution of a soluble zirconyl compound, such as $ZrOCl_2 \cdot 8H_2O$. If excessive zirconyl solution is present, it should be drained off and the resin substantially dried, such as by air-drying. The dried resin, containing the zirconyl compound is neutralized, preferably by use of $NH_4OH$, thereby forming polymeric $ZrO(OH)_2$. Excess $NH_4OH$ and $NH_4Cl$ (which forms) is washed out, such as by repeated contact with water or NaCl brine.

Optionally, the composite is impregnated with acrylic acid which is polymerized in situ with a free--radical or redox polymerization initiator or catalyst. The composite is then preferably treated with an acid.

Optionally, excessive zirconyl solution should be drained off and the resin thoroughly washed with water to substantially remove the zirconyl compound from the void spaces (pores) of the resin, leaving only that which is taken up into the resin phase, then is optionally dried, such as by air-drying.

In the general process outlined above, the beginning zirconyl compound may be $ZrOCl_2 \cdot xH_2O$ or the like, such as $Zr(NO_3)_4 \cdot 5H_2O$, $ZrOBr_2 \cdot xH_2O$, $ZrOI_2 \cdot 8H_2O$,

or $Zr(SO_4)_2 \cdot 4H_2O$, or any such zirconium compound which will precipitate to form $ZrO(OH)_2$ when contacted with a base, especially $NH_4OH$. The so-formed $ZrO(OH)_2$, also called "zirconium hydrous oxide", is an amorphous, polymeric structure. Following the above alkalizing step, the acid used for lowering the pH is preferably HCl, but may also be HBr, HI, $HNO_3$, and the like.

Following the above alkalizing step, acrylic acid monomer is optionally polymerized in situ in the composite; and the acid is then used for lowering the pH.

As stated above, once the resin has been acidized, the composite is ready to take on $SO_4^=$ values from brine. This is done, for example, by placing the composite in a vessel, preferably a column, and passing sulfate-containing brine through the composite until the composite is substantially "loaded" with $SO_4^=$ values and is ready for another aqueous-washing.

The aqueous-washing of the resin to remove sulfate values therefrom, and to regenerate the resin, may be done with water in some cases, e.g., with NaCl brine, but is preferably done with alkaline water, e.g., with $MgCl_2$ brine. For example, the alkaline wash water may be Mg hydrate, caustic, $NH_4OH$ and the like. Following the alkaline wash, the pH of the resin is lowered using an acid wash.

It is within the purview of this invention that the metal salt brine may be a natural brine, such as seawater or mineral brine, a $MgCl_2$ brine, a LiCl brine, a KCl brine, or a metal salt brine which comes

from an ore dressing, ore leaching, mineral dressing, and the like. The brine may contain only a small amount, say less than about one percent of hardness values, preferably less than about 0.1 percent hardness values. The present novel composite exhibits a high affinity for, and a strong preference for, $SO_4^=$ ions, but is also effective for borate, bicarbonate, and/or phosphate ions.

The following examples are intended to illustrate the present invention, but the invention is not limited to the particular examples shown.

Example 1

Here, there is used a macroporous cation exchange resin with $SO_3^-Na^+$ groups affixed to a styrene--divinylbenzene resin structure. Seventy gms of this resin is wetted with a solution of 30 gms $ZrOCl_2 \cdot 8H_2O$ in 30 gms $H_2O$. The wet resin is air dried to a weight of 95.5 gms. The air-dried resin is neutralized with a solution of 16 ml of 30% aqueous $NH_3$ and 35 ml $H_2O$. The excess $NH_4OH$ and the $NH_4Cl$ are washed out by repeated contact with 26% NaCl solution. The washed resin, suspended in an equal volume of 26% NaCl solution has a pH value (glass electrode) of about 8.2. Addition of two ml of 36% HCl lowers the pH to 2.8. The final resin has a settled volume of 139 ml. X-ray diffraction analysis shows no detectable crystallinity.

A vol. of 116 ml of the above resin composite is placed in a column with 73 cm bed depth.

Twenty-six percent NaCl brine containing 970 ppm $SO_4^=$ is pumped downflow at 3.3 ml/min and 50°C. The

effluent brine contains less than 10 ppm $SO_4^=$ for more than 1.5 bed volumes of brine. The resin is washed downflow with water at a rate of 21 ml/min. and at 50°-55°C. The effluent is cut into 25 ml portions. The $SO_4^=$ concentration is found to peak in the fourth cut at 14.8 gms./liter. After one liter of water passage the total $SO_4^=$ in the effluent is 2.91 gms, which is 70% of the $SO_4^=$ content of the resin in the column. Twenty-six percent NaCl brine is acidified to 1.0 pH, and is then pumped downflow through the column at 21 ml./min. The influent brine contains 970 ppm $SO_4^=$ and the effluent 110-120 ppm $SO_4^=$.

The resin is converted from the $Na^+$ form to the $Mg^{++}$ form by treatment with an excess of 0.5N $MgCl_2$. The resin is put in the column and treated with a solution of 6 gms of $MgAc_2 \cdot 4H_2O$ (magnesium acetate) in 150 ml $H_2O$ at a flow rate of 10 ml/min at 50°C. This is followed by 550 ml N/10 HCl at the same rate. The total $SO_4^=$ removed from the resin is 0.532 gms. Thirty-six percent $MgCl_2$ containing 1.13 gm $SO_4^=$/liter, adjusted to one pH, is pumped through at 1.7 ml/min and 50°C. Over one bed volume of effluent is produced with an average $SO_4^=$ content of 40 ppm.

Polymerization of acrylic acid in aqueous solution is readily and conveniently carried out by application of heat, especially in the presence of a free-radical generator, e.g., a small amount of $K_2S_2O_8$. Redox initiators may also be used. The addition of and in situ polymerization of acrylic acid may, alternatively, be performed prior to addition of and precipitation of the zirconium compound. Other polymerizable carboxylic acid monomers may be used, e.g., methacrylic acid, but

acrylic acid is preferred because it is the smallest in molecular size of the unsaturated carboxylic acids.

In certain embodiments the product may be described as a macroporous ion exchange resin of the sulfonated styrene-divinyl benzene type (e.g., DOWEX® MSC-1) containing throughout its bead structure gelatinous zirconium hydroxide or zirconyl hydroxide, and further modified by polyacrylic acid formed by absorbing monomeric acrylic acid into the structure and polymerizing in situ. The resin is initially activated for $SO_4^=$ pick-up by acidizing to 2-3 pH with HCl, thus converting the polymeric $Zr(OH)_4$ to a polymer of the composition $Zr(OH)_3Cl$. The $SO_4^=$ pick-up is an exchange of $2Cl^-$ for one $SO_4^=$. Water regeneration removes $Na_2SO_4$; the $SO_4^=$ comes from the $(Zr(OH)_3^+)_2SO_4^=$ and the $Na^+$ from the $-SO_3^-Na^+$ and the $-COO^-Na^+$.

The initial resin generally contains on the order of at least about one meq. $-SO_3^-H^+$ groups per ml, $Zr(OH)_4$ is added to about 0.8 atom Zr per atom S, and acrylic acid is added to approximately one molecule per atom Zr.

Preferred operation is counterflow at rates of 0.01-0.1 $V_B$/min. at 40°-60°C with about two to about three pH. The flow rate may be increased to 0.2-0.25 $V_B$/min. at 100°-120°C where hot salt brine and water are available. At pH values of much less than two the COONa will be present as COOH and thus will reduce the efficiency of $H_2O$ regeneration; at pH values much above about three some of the Zr will exist as $Zr(OH)_4$ and pick up much less $SO_4^=$.

Example 2:

Performance in the removal of $SO_4^=$ from 26% NaCl with water regeneration is compared between resins with and without -COOH groups. Detailed preparation and operating data are given below.

About 150 ml of DOWEX® MSC-1(8% DVB,50-100 mesh ground) in $H^+$ form was washed and put in a glass column. Thirty-two percent aqueous $ZrOCl_2$ was run through the column downflow until the effluent density was the same as the influent. $N_2$ gas was run through the resin until it was dry and free flowing. Dry weight was 119.7 gms. This resin was poured into 120 ml of 30% aqueous $NH_3$ and allowed to react for 15 minutes. The resin was washed well with water and then with 26% NaCl. Immersed in excess 26% NaCl it was titrated with N/1HCl to 2.4 pH requiring 85 meg. HCl. The resin volume was now 130 ml. One hundred sixteen ml of resin was put in a column and operated upflow with 25% NaCl containing 1800 mg/l $SO_4^=$ at 2.4 pH at 10 ml/min and 72°C. Seven hundred fifteen ml of brine effluent was obtained with the last 100 ml analyzing 1230 mg/l $SO_4$. The resin was regenerated with water downflow at 3.3 ml/min and 72°C, taking cuts of the effluent for analysis.

| Cut # | Vol. (ml) | $SO_4^=$ (mg/l) |
|---|---|---|
| 1 | 50 | 1690 |
| 2 | 25 | 1114 |
| 3 | 10 | 1114 |
| 4 | 10 | 2256 |
| 5 | 10 | 3504 |
| 6 | 10 | 3331 |
| 7 | 10 | 2928 |
| 8 | 10 | not analyzed |
| 9 | 50 | 1981 |

Brine was then run upflow again at 10 ml/min and 72°C, with effluent cuts.

| Cut # | Vol. (ml) | $SO_4^=$ (mg/l) |
|---|---|---|
| 1 | 50 | not analyzed |
| 2 | 30 | not analyzed |
| 3 | 50 | 538 |
| 4 | 100 | 902 |
| 5 | 100 | 1114 |

The resin (130 ml) was then well washed with water and sucked almost dry. It was added to a stirred pot with 75 ml $H_2O$ and a solution containing 20 ml $H_2O$, 5 gm acrylic acid, and 0.2 gm $K_2S_2O_8$. The mix was stirred for 60 minutes at 25°C to initiate polymerization. The mix was then put in a beaker, covered with aluminum foil and put in a 95°C oven overnight to complete polymerization. It boiled to dryness with a small amount of overflow and loss of resin. It was washed with water to give a resin volume of 124 ml (hence a loss of 6 ml). Immersed in 26% NaCl and

titrated up to 2.4 pH with 3 ml N/1 NaOH. One hundred sixteen ml of resin was put in a column and saturated upflow with 900 ml of 2.4 pH 26% NaCl containing 1800 mg/l $SO_4^{=}$ , at a flow rate of 10 ml/min and a temperature of 72°C. The resin was then regenerated downflow with water at 3.2 ml/min and 72°C, taking cuts of the effluent for $SO_4$ analysis:

| Cut # | Vol. (ml) | $SO_4^{=}$ (mg/l) |
|---|---|---|
| 1 | 50 | 1,690 |
| 2 | 25 | 1,517 |
| 3 | 10 | 2,976 |
| 4 | 10 | 8,736 |
| 5 | 10 | 11,616 |
| 6 | 10 | 9,456 |
| 7 | 10 | 7,776 |
| 8 | 10 | 5,904 |
| 9 | 10 | 4,772 |
| 10 | 10 | 4,147 |
| 11 | 10 | not analyzed |
| 12 | 10 | 3,312 |
| 13 | 10 | not analyzed |
| 14 | 10 | not analyzed |
| 15 | 25 | not analyzed |
| 16 | 50 | 1,440 |

The present invention relies, in part, on the step of substantially washing the zirconyl compound, such as $ZrOCl_2$, from the void spaces (pores) of the resin, leaving only the zirconyl compound within the resin phase. Adequate washing with water is determined by analyzing the wash water to determine that substantially no further $ZrO^{++}$ or $Cl^-$ (or other salt ions) is being removed. The washing is done with salt-free

water so as not to remove the zirconyl compound from the resin phase.

In one representative embodiment there is used a macroporous crosslinked styrene-divinylbenzene copolymer which has been sulfonated to about one $-SO_3^-H^+$ group per benzene ring. The beads have about 30-40% porosity and a surface area of about 40-50 $M^2/gm$. The preferred product contains one Zr atom for each two $-SO_3H$ groups, having been formed by exchanging all of the $H^+$ ions in the resin for $ZrO^{++}$ ions from excess $ZrOCl_2$ solution. At this intermediate stage the product is specifically a styrene-divinylbenzene polymer network with affixed $-(SO_3^-)_2-ZrO^{++}$ ionic groups. The close proximity of the $ZrO^{++}$ ions and the $R-SO_3^-$ ions is maintained during the reaction with

$$NH_4OH \text{ to } Zr(OH)_4 + 2R-SO_2-O^-NH_4^+$$

and with NaCl and HCl to the final product

$$ZrO^+(OH)Cl^- + 2R-SO_2-O^-Na^+.$$

This close proximity enhances removal of $Na_2SO_4$ by water, after the $Cl^-$ has been exchanged to $SO_4^=$.

The range of ratios of Zr/S of ~0.4 to ~0.6 is an operable range; preferably, though, the ratio is around or about 0.5.

When using a crosslinked copolymer of styrene-divinylbenzene as the sulfonated polymer for use as a cation exchange resin, it is preferred that the divinylbenzene content of the copolymer be in the range of about 6-20%, preferably around or about 10%.

In contacting the influent brine with the exchange resin composite in accordance with the present invention, it is preferred to operate at about 40°C to about 60°C using a brine pH between about 1-2, using a contact flow rate of about 0.05 to about 0.1 bed volume per minute (BVPM), and using a counterflow water-wash to regenerate the resin once it is loaded with the sulfate or borate or other ions being removed from the brine. At a pH below about one and using a concentrated metal chloride brine, some solubility of $ZrOCl_2$ is likely to be encountered, especially at high temperature. By operating at a pH above about 1.5 (but still at an acid pH) higher temperatures of up to 100°C, or even close to boiling point of the brine, are permissible; at 40°C-60°C, flow rates greater than 0.1 BVPM may cause leakage and an early breakthrough of the sulfate, borate, or other ions sought to be removed from the brine. At pH of two and temperature of 100°C, efficient operation may be obtained at 0.2 BVPM.

As stated above, counterflow of the water-wash to regenerate the resin composite is preferred, but co-flow is operable, though at lower efficiency.

Example 3

About 150 ml of DOWEX® MSC-1 in $H^+$ form, having a mesh size of about 20-50 (U.S. standard sieve size) was washed with water and loaded into a glass column. A 15% $ZrOCl_2$ aqueous solution was flowed down through the resin until the effluent gravity reached 1.10 gms/cc. Then about 25 ml of 32% $ZrOCl_2$ aqueous solution was fed in, followed by one liter of water. Rinse water was flowed until neither $ZrO^{++}$ or $Cl^-$ could be detected in the effluent. This thorough washing

removed excess $ZrOCl_2$ from the voids (pores) of the resin, but did not remove the ionically held groups from the $SO_3^-$ groups in the resin phase.

The resin was removed from the column and treated with excess $NH_4OH$ (about 25 ml of 30% $NH_3$). The resin was washed free of excess $NH_4OH$ and $NH_4Cl$ (which forms), immersed in 26% NaCl, and titrated with 1N HCl to 1.5 pH (requiring 87 meq. HCl). The settled volume of the final resin was 144 ml.

One hundred sixteen ml of the resin was loaded into a temperature controlled jacketed glass column and contacted with 1.5 pH 26% NaCl (containing 2000 mg/1 $SO_4^=$) upflow at 10 ml/min and 65°C. No $SO_4^=$ was detectable in the effluent until 850 ml when a breakthrough of 100 ppm $SO_4^=$ was observed. A total 26% NaCl flow of 1000 ml was achieved with a composite analysis of 173 mg/L $SO_4^=$.

The $SO_4^=$ was eluted downflow with deionized water at 3.2 ml/min. at 65°C. The effluent was collected in cuts and analyzed for $SO_4^=$ content, with the following results:

Effluent Cuts from Downflow Water Regeneration

| Cut # | Vol. (ml) | $SO_4^{=}$ (g/L) |
|---|---|---|
| 1 | 50 | 1.2864 |
| 2 | 25 | 1.2096 |
| 3 | 10 | 1.3824 |
| 4 | 10 | 2.0256 |
| 5 | 10 | 10.944 |
| 6 | 10 | 12.000 |
| 7 | 10 | 10.848 |
| 8 | 10 | 8.928 |
| 9 | 10 | 7.8048 |
| 10 | 10 | 6.768 |
| 11 | 10 | 6.000 |
| 12 | 10 | (not analyzed) |
| 13 | 10 | 4.3680 |
| 14 | 10 | 3.8093 |
| 15 | 25 | 3.0912 |
| 16 | 50 | 2.2464 |

After this downflow water regeneration, 26% NaCl upflow at 10 ml/min. and 65°C was resumed. No $SO_4^{=}$ was detected in the effluent until 500 ml had been purified, at which time about 100 ppm of $SO_4^{=}$ broke through. The composite analysis of the first 500 ml of 26% NaCl was 76.8 mg/l $SO_4^{=}$.

CLAIMS

1. The macroporous cation exchange resins having sulfonic acid functional groups and having polymeric zirconium hydrous oxide contained therein.

2. The exchange resins of Claim 1 having polyacrylic acid contained therein.

3. The exchange resin of Claim 1 having substantially little or no uncombined amorphous polymeric hydrous zirconium oxide in the void or pore phase of the resin.

4. The resin of Claim 3 wherein the resin comprises a crosslinked copolymer of styrene and divinylbenzene, said sulfonic acid functional groups being attached to benzene rings of the copolymer.

5. The resin of Claim 4 wherein the divinylbenzene comprises about 6% to about 20% of the combined weight of styrene and divinylbenzene.

6. A process for preparing a composite of macroporous cation exchange resins having sulfonic acid functional groups and having polymeric zirconium hydrous oxide contained therein, said process comprising

wetting said exchange resin having said sulfonic acid functional groups with an aqueous solution of a zirconyl compound which forms a precipitated zirconium hydrous oxide when alkalized, and

alkalizing said zirconyl compound by contacting it with an alkaline material, thereby precipitating zirconium hydrous oxide in said resin.

7. The process of Claim 6 wherein the zirconyl compound is at least one selected from $ZrOCl_2 \cdot xH_2O$, $Zr(NO_3)_4 \cdot 5H_2O$, $ZrOBr_2 \cdot xH_2O$, $ZrOI_2 \cdot 8H_2O$, or $Zr(SO_4)_2 \cdot 4H_2O$.

8. The process of Claim 6 or 7 wherein the alkaline material is ammonia.

9. The process of Claim 8 wherein there are performed the additional steps of washing out of ammonium compounds and acidizing the composite with at least one acid selected from HCl, HBr, HI, or $HNO_3$.

10. The process of any one of Claims 6 to 9 including the steps of

incorporating acrylic acid in the so-formed composite, and

polymerizing the acrylic acid in situ.

11. The process of Claim 10 including the steps of washing out of ammonium compounds prior to addition of the acrylic acid and acidizing the composite after the in situ polymerization of the acrylic acid.

12. The process of Claim 10 wherein the in situ polymerization of acrylic acid is performed prior to the introduction of the zirconyl compound.

13. The process for making the composite of any one of Claims 3 to 5, said method comprising

adding an aqueous solution of at least one zirconyl or zirconium salt to said particulate, macroporous, cation exchange resin having said sulfonic acid functional groups, thereby causing the resin phase to imbibe zirconyl salt values,

washing excess zirconyl or zirconium salt from the void or pore phase of the resin, using water as the wash liquid, and

alkalizing the so-formed composite to convert the zirconyl salt to an amorphous polymeric hydrous zirconium oxide which remains in the resin phase.

14. The process of Claim 13 wherein the zirconyl or zirconium salt is at least one selected from $ZrOCl_2$, $Zr(NO_3)_4$, $ZrOBr_2$, $ZrOI_2$, $Zr(SO_4)_2$ or hydrates thereof.

15. The process of Claim 13 wherein the resin comprises a crosslinked copolymer of styrene and divinylbenzene having said sulfonic acid functional groups attached thereto.

16. A process which employs the composite of any one of Claims 3 to 5, comprising the steps of

placing the said composite in a vessel adapted for use as an ion exchange vessel,

flowing through said resin an alkali metal brine containing unwanted sulfate, borate, bicarbonate or dihydrophosphate ions, thereby causing said unwanted ions to be trapped by said resin,

ceasing the flow of said brine when the resin is loaded with the unwanted ions, as indicated by breakthrough of said ions in the effluent brine, and

regenerating said resin by water-washing to remove the so-trapped ions.

17. The process of Claim 16 wherein the brine comprises concentrated NaCl containing sulfate ions to be removed.

18. A process for removing $SO_4^=$ ions from an aqueous metal salt solution, said process comprising

contacting said metal salt solution with a macroporous cation exchange resin having sulfonic acid functional groups and having zirconium hydrous oxide contained therein.

19. The process of Claim 18 wherein the metal salt is NaCl, $MgCl_2$ or LiCl.

20. The process of Claim 18 wherein the $SO_4^=$ ions in the resin, following contact of the resin with the metal salt solution, are washed from the resin using an aqueous wash or an alkaline aqueous wash, and, in the case of an alkaline aqueous wash, the acidity of the resin is restored by use of an acid wash.

21. The process of any one of Claims 18 to 20, wherein said metal salt solution is contacted with said exchange resin having, in addition, polyacrylic acid contained herein for removing sulfate, borate, bicarbonate and/or phosphate ions from said aqueous metal salt solution.

European Patent Office

# EUROPEAN SEARCH REPORT

0134314
Application number

EP 83 20 1145

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 066 630 (ASAHI) *Page 4, lines 2-9,15; page 5, line 22 - page 6, line 9* | 1-3 | B 01 J 47/00<br>B 01 J 41/10<br>C 01 D 3/14 |
| A | JOURNAL OF APPLIED CHEMISTRY, OF THE USSR, vol. 48, no. 1, January 1975, pages 33-36, Plenum Publising Corp., New York (USA);<br>A.I.RYABININ et al.: "Sorption of boron from salt solutions under dynamic conditions by sorbents consisting of zirconium hydroxide and anion-exchangers". *Pages 33-36* | 1,3,6-8,13-14,16 | |
| A | CHEMISTRY AND INDUSTRY, 23rd March 1957, pages 365-366;<br>C.B.AMPHLETT et al.: "Ion-exchange porperties of hydrous zirconium oxide". *Pages 365-366* | | TECHNICAL FIELDS SEARCHED (Int. Cl. 3) |
| A | JOURNAL OF AMERICAN CHEM. SOC., vol. 78, 5th January 1956, page 249;<br>K.A.KRAUS et al.: "Anion exchange studies. XIX. Anion exchange properties of hydrous zirconium oxide". | | B 01 J<br>C 01 D |

The present search report has been drawn up for all claims

| Place of search | Date of completion of the search | Examiner |
|---|---|---|
| THE HAGUE | 30-03-1984 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document